# DEMANDE DE BREVET EUROPEEN

(11) **EP 2 259 417 A2**
(43) Date de publication de la demande: **08.12.2010**
(21) Numéro de dépôt: 10164862.4
(22) Date de dépôt: 03.06.2010
(51) Int. Cl.: H02M 3/335

(54) **Convertisseur continu-continu à régulation double alternance**

(30) Priorité: 05.06.2009 FR 0953764
(71) Demandeur: AEG Power Solutions B.V., 1161 AG Zwanenburg (NL)
(72) Inventeur: Baptiste, Thierry, 22300 Lannion (FR); Le Gall, Marcel, 22310 Plestin les Greves (FR)
(74) Mandataire: David, Alain

(57) **Abrégé**

Circuit secondaire de convertisseur continu-continu comprenant une sortie principale (Vp) et une sortie auxiliaire (Va), comportant un circuit principal de redressement synchrone auto-commandé recevant une tension du secondaire (10B) d'un transformateur à prise intermédiaire (10) et délivrant d'une part une première tension redressée double alternance V1 pour la sortie principale et d'autre part une seconde tension redressée simple alternance V2, et un circuit auxiliaire de redressement synchrone commandé par un circuit de commande post-synchrone (26) recevant la seconde tension redressée simple alternance V2 et délivrant une troisième tension redressée simple alternance (V3) pour la sortie auxiliaire.

## Description

### Domaine de la technique

La présente invention se rapporte au domaine des convertisseurs continus-continus à sorties multiples et elle concerne plus particulièrement un circuit secondaire de convertisseur comportant un sortie principale et une sortie auxiliaire.

### Art antérieur

Les convertisseurs continus-continus sont très répandus dans l'industrie et ils existent sous différentes topologies, la plupart comportant un transformateur pour assurer une isolation galvanique entre l'entrée et la sortie du convertisseur. Sont notamment bien connues par exemples les topologies « flyback » et « forward » qui présentent des intérêts, notamment de part leur simplicité de réalisation et leur faible coût, mais fonctionnent toutes deux en simple alternance ou encore les topologies double alternance « push pull » et « full bridge » qui, outre qu'elles nécessitent plus de composants au primaire ou au secondaire, sont souvent rédhibitoires en raison de leur coût ou de leur taille.

En outre, il est parfois souhaitable que de tels convertisseurs disposent de plusieurs sorties. Ainsi, dans le brevet EP1 335 483 A1 à la sortie principale est associée une sortie auxiliaire qui est générée à partir du signal redressé de la sortie principale. Dans le brevet WO 2008/006992 A1, il existe au secondaire du transformateur d'isolement, en sus du premier enroulement secondaire, un deuxième enroulement secondaire et on utilise le signal redressé de la sortie principale pour synchroniser la sortie auxiliaire.

Ces configurations présentent toutefois encore l'inconvénient d'être relativement complexes et peu économiques en terme de coût et d'encombrement.

### But et objet de l'invention

La présente invention a pour but de pallier les inconvénients précités en proposant un convertisseur continu-continu dont le circuit secondaire comprend une sortie principale (Vp) et une sortie auxiliaire (Va), **caractérisé en ce qu**'il comporte:
- un circuit principal de redressement synchrone auto-commandé recevant une tension du secondaire d'un transformateur à prise intermédiaire comportant un premier enroulement secondaire monté en série avec un second enroulement secondaire et délivrant, au niveau de ladite prise intermédiaire reliant deux des extrémités desdits premier et second enroulements secondaires, une première tension redressée double alternance (V1) pour ladite sortie principale et, aux bornes des deux autres extrémités desdits premier et second enroulements secondaires, opposées aux deux premières reliées au niveau de ladite prise intermédiaire, une seconde tension redressée simple alternance (V2), et
- un circuit auxiliaire de redressement synchrone commandé par un circuit de commande de régulation post-synchrone recevant ladite seconde tension redressée simple alternance (V2) et délivrant une troisième tension redressée simple alternance (V3) pour ladite sortie auxiliaire.

Ainsi, la sortie auxiliaire, quoique redressée en simple alternance, peut atteindre avec très peu de composants électroniques des valeurs de tensions égales ou inferieures à la valeur de tension de la sortie principale.

Avantageusement, lesdits premier et second enroulements secondaires sont identiques et enroulés dans le même sens de façon à former un secondaire à point milieu.

Ledit circuit principal de redressement synchrone auto-commandé comporte un transistor direct dont une grille est reliée à une extrémité dudit second enroulement secondaire et un drain est relié à une extrémité dudit premier enroulement secondaire et un transistor de roue libre dont une grille est reliée à ladite extrémité dudit premier enroulement secondaire et un drain est relié à ladite extrémité dudit second enroulement secondaire, les sources desdits transistors direct et de roue libre étant reliées entre elles à un point de référence des tensions de sorties principale et auxiliaire.

Ledit circuit auxiliaire de redressement synchrone commandé comporte un transistor direct dont un drain est relié à ladite extrémité dudit second enroulement secondaire et une source est reliée à un drain d'un transistor de roue libre dont une source est reliée audit point de référence des tensions de sorties principale et auxiliaire, les grilles desdits transistors direct et de roue libre étant reliées à un circuit de commande de régulation post-synchrone.

Avantageusement, lesdits transistors direct et de roue libre sont des MOSFETs.

De préférence, lesdites première et troisième tensions redressées sont chacune filtrées par des filtres LC pour respectivement délivrer lesdites tensions de sorties principale et secondaire.

Brève description des dessins :
Les caractéristiques et avantages de la présente invention ressortiront mieux de la description suivante, faite à titre indicatif et non limitatif, en regard des dessins annexés sur lesquels :
   - La figure 1 illustre un exemple de réalisation d'un circuit secondaire d'un convertisseur continu-continu conforme à la présente invention.
   - La figure 2 est un diagramme des temps de différents signaux relevés à certains points caractéristiques du circuit de la figure 1.

### Description détaillée d'un mode de réalisation préférentielle

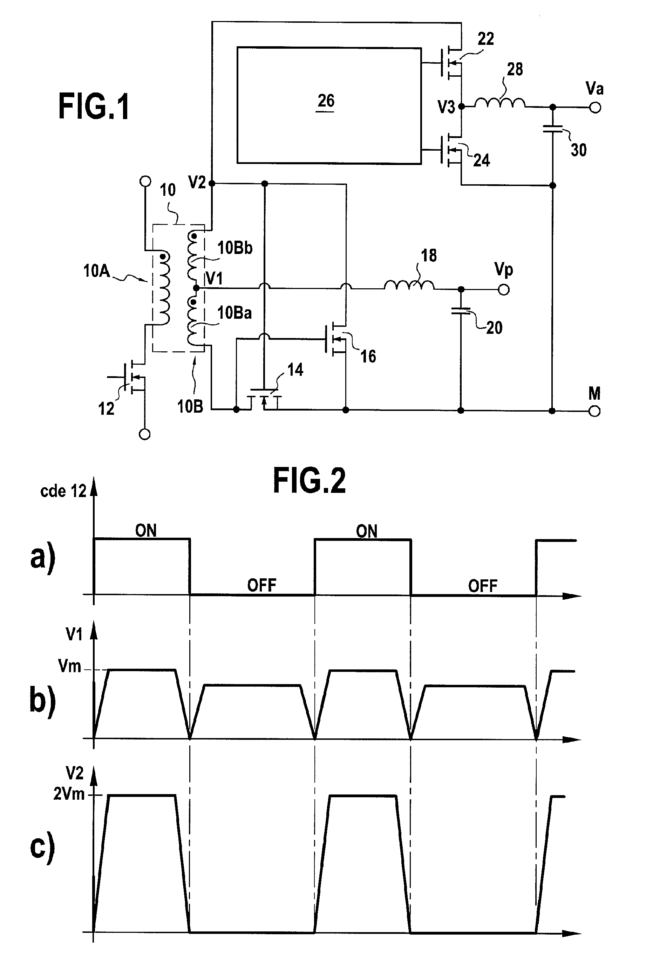

La figure 1 illustre essentiellement le circuit secondaire d'un convertisseur continu-continu conforme à la présente invention, comportant une sortie principale Vp et une sortie auxiliaire Va, le circuit primaire de ce convertisseur étant schématisé seulement par le primaire 10A d'un transformateur d'isolement 10 en série avec un commutateur de commande 12, avantageusement un transistor MOSFET.

Selon l'invention, le secondaire 10B du transformateur est du type à prise intermédiaire, plus précisément à point milieu, c'est à dire qu'il comporte deux enroulements identiques 10Ba et 10Bb, enroulés dans le même sens et disposés en série, de sorte que la tension aux bornes de chacun de ces deux enroulements est identique. Pour la description qui va suivre, on appellera V1 la tension au niveau de la prise intermédiaire (point milieu), point de jonction entre les deux enroulements et correspondant à la tension de sortie principale avant filtrage et V2 la tension au point d'entrée du second enroulement 10Bb.

Associé à la sortie principale est disposé un circuit principal de redressement synchrone auto commandé constitué de deux commutateurs, avantageusement des transistors MOSFET, l'un 14 faisant fonction de transistor direct, l'autre 16 de transistor de roue libre. Les sources du transistor de roue libre 16 et du transistor direct 14 sont reliées entre elles et à un point M de référence des tensions de sorties principales et secondaires. La grille du transistor direct 14 est reliée au drain du transistor de roue libre 16 au point de sortie de la tension V2 correspondant à une extrémité du second enroulement 10Bb dont l'autre extrémité formant aussi le point milieu du secondaire du transformateur est reliée à une extrémité du premier enroulement 10Ba dont l'autre extrémité est reliée au drain du transistor direct 14 relié à la grille du transistor de roue libre 16. Grâce à ces connexions croisées aux deux extrémités du secondaire du transformateur, la commutation des transistors 14 et 16 est automatiquement synchronisée avec le circuit primaire.

Un filtre LC 18 et 20 classique est connecté entre le point milieu du secondaire du transformateur délivrant la tension V1 et le point de référence des tensions, la tension Vp de la sortie principale étant délivrée aux bornes du condensateur 20 entre le point M de référence des tensions et la sortie de l'inductance 18.

Associé à la sortie auxiliaire est disposé un circuit auxiliaire de redressement synchrone commandé constitué de deux commutateurs, avantageusement des transistors MOSFET, l'un 22 faisant fonction de transistor direct, l'autre 24 de transistor de roue libre, commandés par un circuit de commande de régulation post-synchrone 26. Le transistor direct 22 a son drain relié au point de sortie de la tension V2 et sa source reliée au drain du transistor de roue libre 24 dont la source est elle-même reliée au point de référence des tensions. Au point de jonction entre la source du transistor direct 22 et le drain du transistor de roue libre 24 est délivrée la tension V3 correspondant à la tension de la sortie auxiliaire avant filtrage.

Comme pour la sortie principale, la sortie auxiliaire Va est délivrée en sortie d'un filtre LC 28 et 30 classique placé entre la source du transistor direct 22 et celle du transistor de roue libre 24.

Le fonctionnement d'un tel circuit est maintenant explicité en référence aux diagrammes des temps de la figure 2 qui représentent en a) la tension de commande du commutateur de commande 12 en b) la tension V1 et en c) la tension V2.

Dans une première phase, le transistor de commande 12 au primaire conduit (ON) et un signal alternatif est donc présent au secondaire du transformateur 10 entrainant la conduction du transistor direct 14 et le blocage du transistor de roue libre 16. Ce signal est redressé et filtré de façon à obtenir la tension continue désirée au niveau de la sortie principale Vp et également comme il est connu, sous la commande du circuit 26, la tension auxiliaire désirée. Il est toutefois important de noter que la valeur de la tension V2 est le double de celle de la tension V1 et le circuit auxiliaire de redressement qui est à simple alternance reçoit donc cette valeur double et peut ainsi restituer une tension de valeur égale ou inférieure à celle de la tension V1.

Dans une seconde phase, le transistor de commande 12 au primaire est maintenant bloqué (OFF) entrainant le blocage du transistor direct 14 et la conduction du transistor 16. L'extrémité de l'enroulement 10Bb est mis à zéro puisque ce point est relié au point de référence des tensions à travers le transistor de roue libre 16 et la valeur de la tension V2 est donc nulle. La valeur du signal en V1, au point milieu, est par contre positive d'où le caractère double alternance du circuit de redressement principal, la valeur de la tension dépendant du rapport cyclique appliqué sur le transistor 12 (la valeur moyenne de V1 pendant la première phase est égale à la valeur moyenne de V1 pendant la seconde phase).

En utilisant un redressement simple alternance sur la somme des deux enroulements (la tension V2), il est ainsi possible de doubler la tension obtenue pour compenser le fait d'utiliser ce type de redressement et obtenir alors une sortie auxiliaire dont la tension Va peut être égale à la tension Vp de la voie principale. Par exemple, à partir d'une tension principale qui a une valeur de 3,3V, il est possible de créer une voie auxiliaire qui a une valeur de 2,5V. En outre, cette configuration ne fait pas intervenir de composants supplémentaires pour obtenir la tension redressée simple alternance engendrant la tension auxiliaire Va puisque ce sont les transistors permettant l'obtention de la tension principale Vp qui sont réutilisés.

Au contraire, si on avait utilisé un redressement simple alternance de la tension V1 pour créer la tension auxiliaire Va, la valeur maximale de cette tension aurait été limitée à la moitié de la tension principale Vp et à partir d'une tension principale de valeur 3,3V il n'aurait pas été possible de créer une voie auxiliaire de 2,5V comme le permet l'invention.

En outre, le recours à la tension V2 permet d'éviter d'utiliser pour la régulation de la tension auxiliaire, comme il est connu, une tension redressée double alternance dont la stabilité est alors très difficile à contrôler. En effet, du fait que l'amplitude de la tension redressée pendant la première phase n'est généralement pas égale à l'amplitude de la tension pendant la deuxième phase (voir la figure 2b), la loi de contrôle de la régulation auxiliaire change nécessairement de pente. Ceci a pour effet de changer le gain du contrôle quand la consigne passe d'une phase à l'autre et le contrôle doit donc être conçu pour prendre en compte ce changement brusque de pente et de gain, ce qui en pratique est relativement complexe. De plus, le passage par zéro de la tension redressée double alternance lors de la commutation du transistor au primaire crée une variation rapide du rapport cyclique qui engendre une sorte de non-linéarité ou d'hystérésis dans la fonction de transfert de la commande de la régulation auxiliaire compliquant encore plus son contrôle.

## Revendications

1. Circuit secondaire de convertisseur continu-continu comprenant une sortie principale (Vp) et une sortie auxiliaire (Va), **caractérisé en ce qu'**il comporte:
- un circuit principal de redressement synchrone auto-commandé recevant une tension du secondaire (10B) d'un transformateur à prise intermédiaire (10) comportant un premier enroulement secondaire (10Ba) monté en série avec un second enroulement secondaire (10Bb) et délivrant, au niveau de ladite prise intermédiaire reliant deux des extrémités desdits premier et second enroulements secondaires, une première tension redressée double alternance (V1) pour ladite sortie principale et, aux bornes des deux autres extrémités desdits premier et second enroulements secondaires, opposées aux deux premières reliées au niveau de ladite prise intermédiaire, une seconde tension redressée simple alternance (V2), et
- un circuit auxiliaire de redressement synchrone commandé par un circuit de commande de régulation post-synchrone (26) recevant ladite seconde tension redressée simple alternance (V2) et délivrant une troisième tension redressée simple alternance (V3) pour ladite sortie auxiliaire.

2. Circuit secondaire de convertisseur continu-continu selon la revendication 1, **caractérisé en ce que** lesdits premier et second enroulements secondaires sont identiques et enroulés dans le même sens de façon à former un secondaire à point milieu.

3. Circuit secondaire de convertisseur continu-continu selon l'une quelconque des revendications précédentes, **caractérisé en ce que** ledit circuit principal de redressement synchrone auto-commandé comporte un transistor direct (14) dont une grille est reliée à une extrémité dudit second enroulement secondaire et un drain est relié à une extrémité dudit premier enroulement secondaire et un transistor de roue libre (16) dont une grille est reliée à ladite extrémité dudit premier enroulement secondaire et un drain est relié à ladite extrémité dudit second enroulement secondaire, les sources desdits transistors direct et de roue libre étant reliées entre elles à un point de référence des tensions de sorties principale et auxiliaire.

4. Circuit secondaire de convertisseur continu-continu selon l'une quelconque des revendications précédentes, **caractérisé en ce que** ledit circuit auxiliaire de redressement synchrone commandé comporte un transistor direct (22) dont un drain est relié à ladite extrémité dudit second enroulement secondaire et une source est reliée à un drain d'un transistor de roue libre (24) dont une source est reliée audit point de référence des tensions de sorties principale et auxiliaire, les grilles desdits transistors direct et de roue libre étant reliées à un circuit de commande de régulation post-synchrone (26).

5. Circuit secondaire de convertisseur continu-continu selon la revendication 3 ou la revendication 4, **caractérisé en ce que** lesdits transistors direct et de roue libre sont des MOSFETs.

6. Circuit secondaire de convertisseur continu-continu selon l'une quelconque des revendications précédentes, **caractérisé en ce que** lesdites première et troisième tensions redressées sont chacune filtrées par des filtres LC pour respectivement délivrer lesdites tensions de sorties principale et secondaire.

7. Convertisseur continu-continu comportant un circuit secondaire selon l'une quelconque des revendications 1 à 6.
